# EUROPÄISCHE PATENTSCHRIFT

(11) **EP 1 442 812 B1**
(45) Veröffentlichungstag und Bekanntmachung des Hinweises auf die Patenterteilung: **15.09.2010**
(21) Anmeldenummer: 03027123.3
(22) Anmeldetag: 26.11.2003
(51) Int. Cl.: B23B 49/00, B25H 1/00, B23Q 11/00, B23Q 5/34, B23Q 5/54, B23Q 9/00

(54) **Bohrvorsatzvorrichtung**
Attachment for Drilling machine
Accessoire pour perceuse

(30) Priorität: 31.01.2003 DE 10303804
(43) Veröffentlichungstag der Anmeldung: 04.08.2004
(73) Patentinhaber: Airbus Deutschland GmbH, 21129 Hamburg (DE)
(72) Erfinder: Otten ,Jürgen, 27419 Tiste (DE)
(74) Vertreter: Hansmann, Dierk

(56) Entgegenhaltungen:
- WO-A-98/52723
- DE-A- 19 945 097
- GB-A- 518 297
- US-A- 4 850 755
- US-A- 5 131 793
- US-A- 5 704 739
- US-B1- 6 247 879

## Beschreibung

Die Erfindung betrifft eine Bohrvorsatzvorrichtung zur Unterstützung einer Vorschubbewegung einer Bohrmaschine, wobei eine Bohrvorsatzvorrichtung über eine Verriegelungseinheit durch einen mechanischen Vorschubmechanismus zum Führen eines Bohrwerkzeuges angeordnet und die Verriegelungseinheit im wesentlichen eine Verriegelungsbuchse umfaßt.

Bei der Fertigung von Flugzeugbauteilen werden zum Verbinden von Bauteilen eine Vielzahl von Nietverbindungen benötigt, für die entsprechende Bohrungen vorzusehen sind. Es ist bei handgeführten Werkzeugen in einem Montageprozess in großvolumigen Bauteilen wie beispielsweise in einem Flugzeugrumpf problematisch, diese an unterschiedlichen Bearbeitungsstellen in Position zu halten, wenn diese Bearbeitungsstellen schwer zugänglich und/oder die Werkzeuge oder Maschinen schwergewichtig sind und frei geführt werden sollen. So sind beispielsweise bei der Strukturmontage eines Flugzeugrumpfes Bohrungen in unterschiedlichen Arbeitspositionen durchzuführen und die Handhabung der Maschinen ist für einen Montagearbeiter kraftaufwendig sowie ergonomisch oft an der Grenze der Belastbarkeit. Darüber hinaus ist bei einem frei geführten und kraftaufwendigen Montageprozess die präzise senkrechte Führung des Bohrwerkzeuges gegenüber dem Bauteil zum Erreichen einer qualitätsgerechten Bohrung notwendig und die durch den Montagearbeiter aufzubringende Vorschubkraft muss präzise diese Richtung einhalten, was bei schwer zugänglichen Bearbeitungsstellen problematisch ist.

Nach der US-A-5 131 793 ist bereits eine Bohrvorsatzvorrichtung gemäß dem Oberbegriff des Anspruchs 1 bekannt geworden, die eine Anordnung mit einer aufgesetzten Veniegelungsbuchse aufzeigt. Die Einstellung eines Vorschubes über eine verstellbare Mittelanordnung sowie die einstellbare Verriegelung ist hierbei für die Anbringung einer Vielzahl von Bohrungen an unterschiedlichen Bearbeitungsstellen mit begrenzter Zugänglichkeit nur bedingt einsetzbar.

Ferner ist nach der GB 518 297 A eine Vorschubeinrichtung über eine Gewindespindel einer geführten Bohrmaschine bekannt.

Der vorliegenden Erfindung liegt somit die Aufgabe zugrunde, eine gattungsgemäße Vorrichtung zu schaffen, die für einen Montagearbeiter eine Entlastung von körperlich schwerer Arbeit ermöglicht und eine präzise senkrechte Führung des Bohrwerkzeuges gegenüber dem Bauteil zum Erreichen einer qualitätsgerechten Bohrung erreicht. Die durch den Montagearbeiter aufzubringende Vorschubkraft ist trotz unterschiedlichster Arbeitspositionen unaufwändig aufzubringen.

Diese Aufgabe wird erfindungsgemäß durch die im Patentanspruch 1 genannten Maßnahmen gelöst.

Dabei ist nach Anspruch 1 insbesondere vorteilhaft, dass eine Arbeitsvorrichtung geschaffen wurde, die wirkungsvoll vermeidet, dass der Bohrdruck in ungünstiger Körperhaltung aufgebracht werden muss.
Es wird über Stellmittel eine Unterstützungskraft an einer Bearbeitungsstelle zur Verfügung gestellt und damit die körperlich schwere Arbeit beim Führen eines Werkzeuges in ungünstigen ergonomischen Arbeitshaltungen erleichtert. Der Schulter-Arm-Bereich eines Montagearbeiters wird erheblich entlastet. Die Verletzungsgefahr durch das Bohrwerkzeug wird minimiert. Die Vorrichtung ist für den Montagearbeiter leicht zu handhaben. Das Nutzungspotential ist insbesondere für einen Montageprozess innerhalb eines großvolumigen Bauteils, beispielsweise eines Flugzeugrumpfes, mit einer Vielzahl von auszuführenden Bohrungen hoch.

Weiterbildungen und vorteilhafte Ausgestaltungen sind in den Ansprüchen 2 bis 11 angegeben. Einzelheiten und weitere Vorteile ergeben sich aus der nachfolgenden Beschreibung von Ausführungsbeispielen der Erfindung.

In der Zeichnung sind Ausführungsbeispiele der Erfindung dargestellt, welche nachstehend anhand der Figuren 1 bis 4 näher beschrieben sind. In den Figuren sind gleiche Bauteile mit gleichen Bezugszeichen versehen.
Es zeigen im einzelnen:
- Fig. 1: eine schematische Darstellung einer Bohrvorsatzvorrichtung in Kombination mit einer Bohrmaschine,
- Fig. 2: eine erste Ausführungsform der Bohrvorsatzvorrichtung in einer vergrößerten Schnittdarstellung,
- Fig. 3, 3A: eine zweite Ausführungsform der Bohrvorsatzvorrichtung in schematischer Darstellung und
- Fig. 4: eine dritte Ausführungsform der Bohrvorsatzvorrichtung in einer Anwendung mit einer Klemmeinheit.

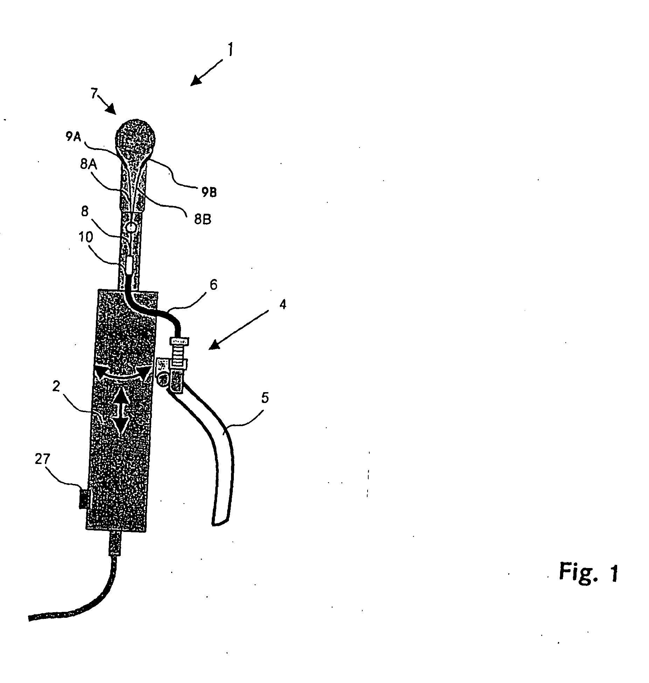

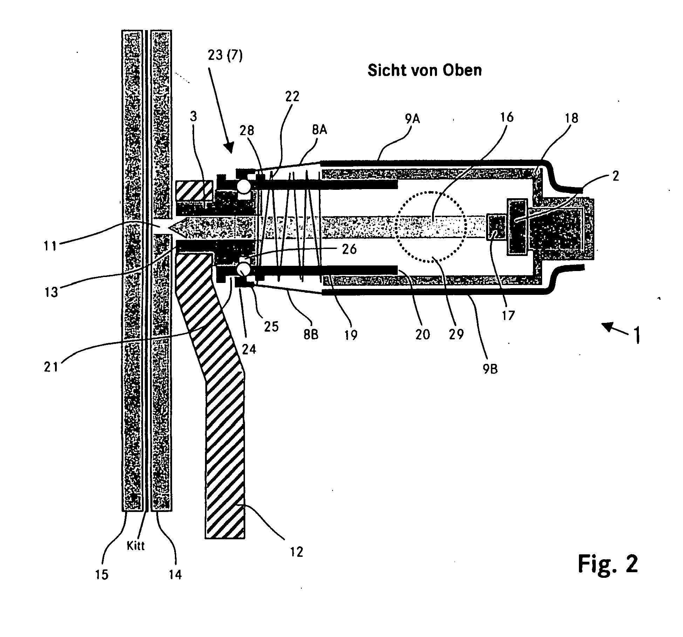

In der Figur 1 ist in schematischer Darstellung eine Bohrvorsatzvorrichtung 1 in Kombination mit einer Bohrmaschine 2 ersichtlich. Die Bohrvorsatzvorrichtung 1 ist mit einer Verriegelungseinheit 7 sowie einem mechanischen Vorschubmechanismus 4 zum Führen und Verschieben eines Bohrwerkzeuges (gezeigt in Fig. 2ff.) ausgestattet. Es ist ersichtlich, das ein Vorschubhebel 5 im Bereich des Handhabebereichs der Bohrmaschine 2, vorzugsweise einer Winkelbohrmaschine, angeordnet ist und damit für einen Montagearbeiter eine leichte und gut erreichbare Bedienung des Hebels möglich ist, während er die Bohrmaschine hält. Der Vorschubhebel 5 kann gemäß der Pfeildarstellungen in Fig. 1 - entsprechend den Anforderungen - im Handhabebereich des Montagearbeiters einstellbar ausgeführt sein und somit an eine Rechtshandbedienung oder auch eine Linkshandbedienung angepasst werden. Weiterhin ist es in einer alternativen Lösung möglich, eine Kombination zwischen einem Aus- und Ein-Schalter 27 und dem Vorschubhebel 5 zu bilden oder sogar den Vorschubhebel 5 als separate Bedieneinheit von der Bohrmaschine 2 zu trennen. Der Vorschubhebel 5 ist über einen als Stellmittel vorgesehenen Bowdenzug 6 mit der Verriegelungseinheit 7 verbunden, welche bei richtig positionierter Bohrmaschine 2 eine Verriegelung zwischen einer an der Bohrstelle aufgesetzten Bohrbuchse 3 und der Maschine 2 erzeugt und eine Bohrvorschubkraft präzise in Bohrvorschubrichtung aufbringt. Der Bowdenzug 6 weist ein Seil 8 auf, welches in zwei Seilenden 8A und 8B übergeht. Eine Fixierung des Bowdenzuges 6 erfolgt an einem Anbringungsort 10 am Gehäuse der Bohrmaschine 2. Über den Fixpunkt 10 und Umlenkhülsen 9A, 9B werden die Seilenden 8A und 8B an die entsprechenden Angriffstellen des Bohrvorsatzes 1 gelenkt.
Die genaue Wirkungsweise der Vorrichtung 1 wird anhand der nachfolgenden Figuren detaillierter beschrieben.

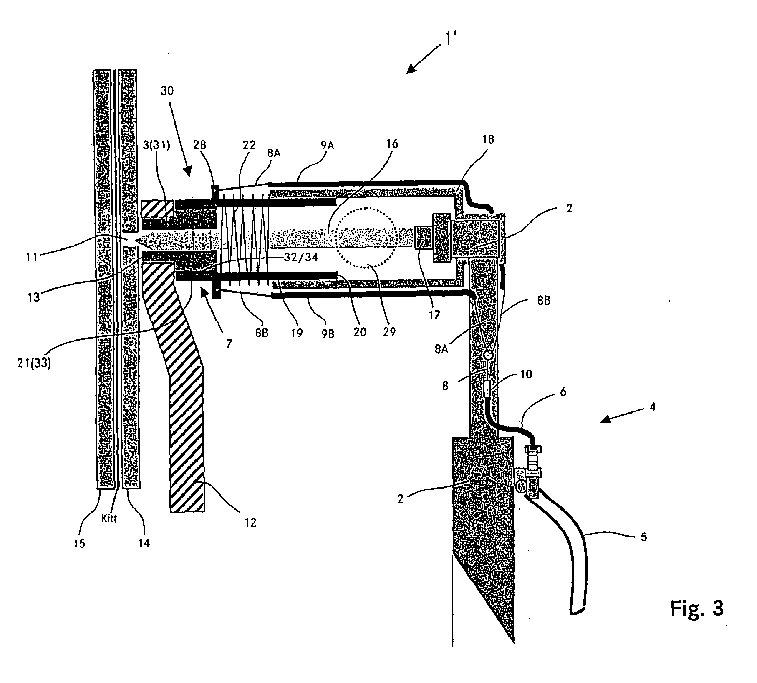

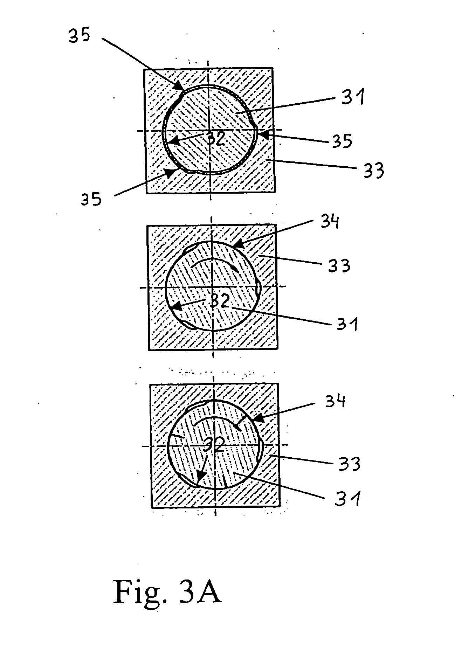

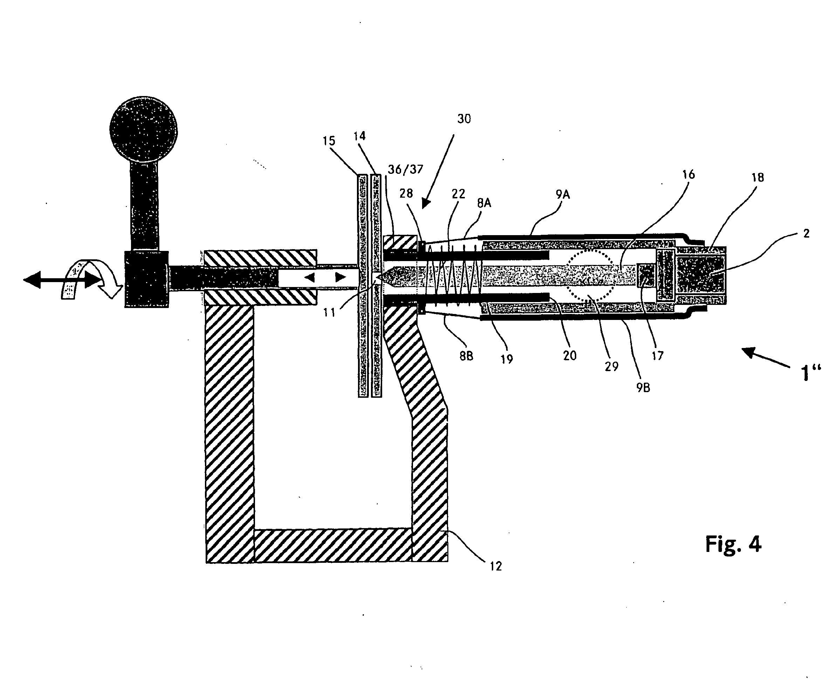

In Fig. 2 ist in einer Schnittdarstellung die Bohrvorsatzvorrichtung 1 in einer ersten Ausführungsform gezeigt. In schematischer Weise sind die wesentlichen Funktionen erkennbar. Eine Bohrbuchse 3 wird in eine Öffnung 13 eines Klemmelementes 12, d.h. eines Klemmbügels als Bestandteil einer Klemmeinheit zur Klemmung der Bauteile 14 und 15 eingesetzt. Die Klemmeinheit mit dem Klemmelement 12 klemmt im gezeigten Fall die Platten 14 und 15 zusammen, um eine Bohrung durch das Vorbohrloch 11 im ersten Bauteil 14 und durch das zweite Bauteil 15 durchführen zu können. Mit dem Einsetzen und bedarfsweise Fixieren der Bohrbuchse 3 in der Positionieröffnung 13 des Klemmbügels 12 ist ein präzises Positionieren der Bohrvorsatzvorrichtung 1 und der Bohrmaschine 2 an der Bearbeitungsstelle möglich. Diese beschriebene Methode des Positionierens ist eine Variante für den Einsatz der Bohrvorsatzvorrichtung. Es ist auch möglich, Bohrschablonen, Bohrspannschablonen oder Bohrspannzangen zu verwenden und je nach Anwendungsfall möglicherweise das Vorbohrloch einzusparen.
Die Bohrvorsatzvorrichtung 1 weist eine Vorsatzhülse 18 auf, welche auf den vorderen Bereich der Bohrmaschine 2 aufgesteckt ist und im wesentlichen das Bohrwerkzeug 16 umhüllt. Das Bohrwerkzeug 16 wird durch eine Spanneinrichtung 17 der Bohrmaschine 2 aufgenommen. Zwischen der Vorsatzhülse 18 und der Verriegelungseinheit 7 besteht eine Wirkverbindung, wobei die Vorsatzhülse 18 über einen Endbereich 20 einer Verriegelungsbuchse 19 relativbeweglich angeordnet ist. Für das Ausführen der Bohrung wird das Bohrwerkzeug 16 in die Bohrbuchse 3 geführt. Die Verriegelungsbuchse 19 der Bohrvorsatzvorrichtung 1 wird auf die Bohrbuchse 3 gesteckt und durch Betätigung des Bowdenzuges 6, betätigt mittels des Vorschubhebels 5 (siehe Fig. 1), verriegelt diese Position mittels einer Kugelverriegelung 23, wie nachfolgend beschrieben. Durch das Betätigen des Bowdenzuges 6 werden die Seilenden 8A und 8B nach hinten gezogen. Damit wird ein auf dem vorderen Ende 21 der Verriegelungsbuchse 19 positionierter Schließring 24, der mit den Seilenden 8A und 8B verbunden ist, über einen Kugelring 25 geschoben, die Kugeln werden durch Öffnungen in der Verriegelungsbuchse 19 hindurch in eine Aufnahme 26 der Bohrbuchse 3 gedrückt und ermöglichen eine formschlüssige Verbindung zwischen der an der Bohrstelle fixierten Bohrbuchse 3 und der Bohrmaschine 2. Damit ist eine präzise senkrechte Führung der Bohrmaschine gegenüber dem Bauteil realisiert. Neben dieser beschriebenen Ausführung zur Verriegelung sind jedoch auch weitere bekannte Verriegelungsmechanismen oder Schnellverschlusssysteme anwendbar. In den Figuren 3 und 4 sind weitere Ausführungsformen gezeigt.

Die Fign. 3 und 4 zeigen weitere bevorzugte Ausführungsformen einer Bohrvorsatzvorrichtung. Hierbei wird die aus DE 199 45 097 A1 bekannte Spannmitteltechnik genutzt und eine Verbindung zwischen der Bohrbuchse 3 und der Verriegelungsbuchse 19 erreicht. Die Bedienung des Bowdenzugs 6 über den Vorschubhebel 5 ist, im Gegensatz zur ersten Ausführungsform, für eine derartige Verriegelung nicht notwendig. Die Bedienung des Bowdenzuges 6 erfolgt ausschließlich zur Erzeugung des Bohrvorschubs.
In Fig. 3 ist eine zweite Ausführungsform der Bohrvorsatzvorrichtung 1' dargestellt. Die Winkelbohrmaschine 2 weist im vorderen Bereich das Bohrwerkzeug 16 und die dieses Werkzeug 16 umhüllende Bohrvorsatzvorrichtung 1' auf. Der wesentliche Aufbau der Vorrichtung 1' mit der Vorsatzhülse 18 und der Verriegelungsbuchse 19 entspricht dem Aufbau der bereits beschriebenen Ausführungsform in Fig. 2. Jedoch ist hier das Verriegeln der Bohrmaschine 2 mit der aufgesetzten Verriegelungsbuchse 19 an der Bohrbuchse 3 unter Ausnutzung einer Kreiskeiltechnik gelöst.
In Fig. 3A ist das Grundprinzip einer derartigen Verriegelung ersichtlich. Die dargestellte Welle 31 entspricht der Bohrbuchse 3 im vorliegenden Anwendungsfall, deren Aufnahmebereich für die Verriegelungsbuchse 19 eine äußere Fügefläche 32 bildet. Der Bereich 21 der Verriegelungsbuchse 19 entspricht einer Nabe 33 und weist eine Innenfläche 34 auf, die mit der Form der äußeren Fügefläche 32 abgestimmt ist. Es sind Keilprofile 35 in den Flächen 32 und 34 vorgesehen, die durch gegenseitiges Verdrehen in Reibschluss gebracht werden. Die Fügeflächen 32 und 34 werden durch mindestens zwei Segmente einer logarithmischen Spirale (Kreiskeile) gebildet, wobei die Anzahl der Keile 35 sowie deren Steigungen für Welle und Nabe gleich sind. In der obersten Darstellung ist ersichtlich, dass zwischen Welle 31 und Nabe 33 ein ausreichendes Fügespiel vorhanden ist. Damit ist ein leichtes Aufschieben der Verriegelungsbuchse 19 auf die Fügefläche 32 der Bohrbuchse 3 möglich. Im zweiten Bild ist ersichtlich, dass ein Spielausgleich erfolgt durch ein Verdrehen der Flächen 32 und 34 zueinander und damit sich die Fügeflächen berühren. Im untersten Bild ist gezeigt, dass durch weiteres Verdrehen zwischen den Fügeflächen 32 und 34 ein Fugendruck aufgebaut wird und ein radiales Verspannen der beiden Teile 31 und 33 erfolgt.
Das Ankoppeln sowie Abkoppeln der Bohrmaschine 2 an der Bohrbuchse 2 ist somit durch Aufsetzen und einem Verdrehen der Bohrmaschine 2 mit einem Winkel von ca. 10 bis 20 Grad möglich. Eine Betätigung des Bowdenzuges 6 erfolgt zur Erzeugung des Bohrvorschubes. Dafür sind am Anschlag 28 der Verriegelungsbuchse 19 die Seilenden 8A und 8B befestigt und ziehen die Vorsatzhülse 18 über den Endbereich der Verriegelungsbuchse 19. Der Ablauf eines Bohrvorganges wird im späteren beschrieben.

In Fig. 4 ist eine dritte Ausführungsform 1" der Bohrvorsatzvorrichtung gezeigt. Diese Ausführungsform nutzt ebenfalls die zuvor beschriebene Kreiskeil-Spanntechnik, um die Bohrmaschine 2 spielfrei an der Bohrstelle zu positionieren. Die Verriegelungsbuchse 19 wird direkt in das Klemmelement 12 eingeführt und weist im Anfangsbereich 21 eine Außenfläche 36 auf, die mit einer Innenfläche 37 eines Einsatzes des Klemmelementes 12 korrespondiert. Insbesondere in Einsatzfällen bei nicht ausreichendem Platz zum Handhaben der Bohrmaschine 2 ist wegen der geringen Aufbauhöhe diese Lösung von Vorteil. Die Wirkungsweise der Flächen 36 und 37 zum Spannen sind bereits in Fig. 3A beschrieben. Durch das Verdrehen der Bohrmaschine 2 wird der verriegelte Zustand erreicht und der Bohrvorschub kann nunmehr über den mechanischen Vorschubmechanismus 4 mit dem Stellmittel 6 erzeugt werden.

Nach dem Positionieren der Bohrmaschine 2 mit dem Vorsatz 1 und dem Verriegeln ist das Bohrwerkzeug 16 für den Einsatz bereit. Nachfolgend wird der Ablauf eines Bohrvorganges beschrieben. Die Bohrmaschine 2 wird über einen Schalter 27 eingeschaltet. Die Vorschubkraft zum Ausführen der Bohrung wird mittels des Vorschubhebels 5 aufgebracht. Der Bediener muss nicht die Bohrmaschine 2 präzise in der Bohrachse in Richtung des Bauteils 14 (und des Bauteils 15) drücken, um die notwendige Vorschubkraft aufzubringen; er kann in ergonomisch günstiger Position durch Betätigung des leicht zugänglichen Vorschubhebels 5 über den Bowdenzug 6 die notwendige Vorschubkraft am Bohrwerkzeug 16 aufbringen. Eine senkrechte Führung des Bohrwerkzeugs 16 gegenüber dem Bauteil 14 zum Erreichen einer qualitätsgerechten Bohrung wird durch das Ankoppeln und Verriegeln des Bohrvorsatzes 1 an der Bohrbuchse 3 bzw. einem Einsatz 37 erreicht. Die durch den Montagearbeiter aufzubringende Vorschubkraft wird mit der Nutzung des Bowdenzuges als ein Stellmittel unaufwändig übertragen und kann präzise die Bohrvorschubrichtung einhalten. Über am Gehäuse der Vorsatzhülse 18 befestigte Umlenkhülsen 9A und 9B werden die Seilenden als Betätigungsmittel zur vorgesehenen Angriffsstelle an der Verriegelungsbuchse 19 geführt. Mittels einer Betätigung des Seiles 8 des Bowdenzuges 6 mit den Seilenden 8A und 8B wird die Vorsatzhülse 18 und damit die gesamte Bohrmaschine 2 mit dem Bohrwerkzeug 16 in Richtung des Bauteils 14 bewegt. Eine Führung dieser Bewegung erfolgt durch das Aufschieben der Vorsatzhülse 18 auf die Verriegelungsbuchse 19. Ein Anschlag 28 an der Verriegelungsbuchse 19 begrenzt die Bewegung der Vorsatzhülse 18. Der Anschlag 28 kann als ein Absatz vorgesehen sein (unveränderlicher Vorschubweg) oder mittels eines feststellbaren Ringes (nicht gezeigt) auf der Verriegelungsbuchse 19 verschiebbar sein (einstellbarer Vorschubweg). Wenn eine Vielzahl von Bohrungen in den Bauteilen 14, 15 mit festen Vorschubwegen durchzuführen sind, ist der Anschlag 28 in Form eines Absatzes als bevorzugte Variante anzuwenden. Wenn der Anschlag 28 erreicht ist, ist das Bohrwerkzeug 16 mit dem Bohrvorgang fertig und das Rückholen des Bohrwerkzeugs 16 und der gesamten Bohrmaschine 2 erfolgt mittels einer Rückholfeder 22.
Innerhalb des Bohrvorsatzes 1 ist ein Anschluss 29 an eine Absaugleitung vorgesehen, um die während des Bohrens entstehenden Späne abzusaugen und damit ein sauberes und qualitätsgerechtes Arbeiten zu erreichen.
Als weitere Ausbildungen der Erfindung kann der Bohrvorschub geregelt werden mittels einem Oeldruckzylinder, um eine gleichmäßige Bohrvorschubbewegung zu erzeugen. Ebenfalls ist es denkbar, im Bowdenzug 6 eine Kraftbegrenzung einzusetzen.

### Bezugszeichenliste

- 1 -: Bohrvorsatzvorrichtung
- 2 -: Bohrmaschine
- 3 -: Bohrbuchse
- 4 -: mechanischer Vorschubmechanismus
- 5 -: Vorschubhebel
- 6 -: Bowdenzug
- 7 -: Verriegelungseinheit
- 8 -: Seilzug
- 8A, 8B -: Seilenden
- 9A, 9B -: Umlenkhülsen, Führungshülsen
- 10 -: Anbringungsstelle
- 11 -: Vorbohrloch
- 12 -: Klemmelement
- 13 -: Öffnung (Positionieröffnung)
- 14, 15 -: Bauteilplatten
- 16 -: Bohrwerkzeug
- 17 -: Spanneinrichtung für Bohrer der Bohrmaschine
- 18 -: Vorsatzhülse
- 19 -: Verriegelungsbuchse
- 20 -: Endbereich der Buchse
- 21 -: Anfangsbereich der Buchse
- 22 -: Rückholfeder
- 23 -: Kugelverriegelung
- 24 -: Schließring
- 25 -: Kugelring
- 26 -: Aufnahme für Kugeln in Bohrbuchse
- 27 -: Schalter
- 28 -: Anschlag
- 29 -: Absaugung
- 30 -: Kreiskeil-Verriegelung
- 31 -: Welle/Außenform der Buchse 3
- 32 -: äußere Fügefläche
- 33 -: Nabe/ Bereich 21 der Verriegelungsbuchse 19
- 34 -: Innenfläche/innere Fügefläche
- 35 -: Keilprofil
- 36 -: Außenfläche/Verriegelungsbuchse 19
- 37 -: Innenfläche/Einsatz

## Patentansprüche

1. Bohrvorsatzvorrichtung zur Unterstützung einer Vorschubbewegung einer Bohrmaschine (2), wobei die Bohrvorsatzvorrichtung (1) eine Verriegelungseinheit (7) sowie einen mechanischen Vorschubmechanismus (4) zum Führen eines Bohrwerkzeuges (16) aufweist und wobei die Verriegelungseinheit (7) im Wesentlichen eine Verriegelungsbuchse (19) umfasst, die mit einer an der Bohrmaschine (2) befestigten Vorsatzhülse (18) in Wirkverbindung steht und der Vorschubmechanismus (4) über eine Betätigungseinheit (5) und ein Stellmittel (6) die Vorschubbewegung der Bohrmaschine (2) ausführt, **dadurch gekennzeichnet, dass** als Stellmittel ein Bowdenzug mit einem Seil (8) vorgesehen ist, wobei das Seil (8) am Stellort mindestens zwei Seilenden (8A, 8B) aufweist, die an der Verriegelungsbuchse (19) angreifen und dass die Betätigungseinheit (5) als im Halte- und Zugriffsbereich der Bohrmaschine (2) angeordneter Vorschubhebel ausgebildet ist.

2. Vorrichtung nach Anspruch 1, **dadurch gekennzeichnet, dass** das Seil (8) des Bowdenzuges (6) in der Führung zur Angriffsstelle (24, 28) an der Verriegelungsbuchse (19) in Umlenk- und Führungshülsen (9A, 9B) angeordnet ist.

3. Vorrichtung nach einem der Ansprüche 1 oder 2, **dadurch gekennzeichnet, dass** die Verriegelungsbuchse (19) an einer an der Bohrstelle (11) angeordneten Bohrbuchse (3) andockt und verriegelt.

4. Vorrichtung nach Anspruch 3, **dadurch gekennzeichnet, dass** am vorderen Ende (21) der Verriegelungsbuchse (19) ein Schließring (24) vorgesehen ist, an dem die Seilenden (9, 10) angreifen, der Schließring (24) durch Betätigung des Stellmittels (6) über Kugelelemente (25) schiebbar ist und somit eine formschlüssige Verbindung zwischen Bohrbuchse (3) und der Verriegelungsbuchse (19) herstellt.

5. Vorrichtung nach einem der Ansprüche 1 bis 4, **dadurch gekennzeichnet, dass** die Verriegelungsbuchse (19) an einem an der Bohrstelle (11) angeordneten Klemmelement (12) bzw. an einer Bohrschablone direkt verriegelbar ist.

6. Vorrichtung nach einem der Ansprüche 3 oder 5, **dadurch gekennzeichnet, dass** zwischen Verriegelungsbuchse (19) und Bohrbuchse (3) bzw. Klemmelement (12) eine Kreiskeilverriegelung mittels Reibschluss vorgesehen ist.

7. Vorrichtung nach einem der Ansprüche 1 bis 6, **dadurch gekennzeichnet, dass** nach Herstellen einer starren Verbindung zwischen Verriegelungsbuchse (19) und Bohrbuchse (3) bzw. Klemmelement (12) sowie nach Einschalten des Startknopfes (27) der Bohrmaschine (2) eine Betätigung des Stellmittels (6) erfolgt und damit eine Bohrvorschubbewegung in Richtung der Bohrstelle ausführbar ist.

8. Vorrichtung nach einem der Ansprüche 1 bis 7, **dadurch gekennzeichnet, dass** eine Begrenzung des Bohrvorschubweges als Anschlag durch einen Absatz (28) oder einen verstellbaren Ring auf der Verriegelungsbuchse (19) realisiert ist.

9. Vorrichtung nach einem der Ansprüche 1 bis 8, **dadurch gekennzeichnet, dass** nach Erreichen der Bohrvorschubwegbegrenzung eine zwischen der Verriegelungsbuchse (19) und der Vorsatzhülse (18) angeordnete Rückholfeder (22) die Bohrmaschine (2) entgegen der Bohrvorschubbewegung aus dem Bohrloch zieht.

10. Vorrichtung nach einem der vorangegangenen Ansprüche, **dadurch gekennzeichnet, dass** die Bohrbuchse (3) mittels eines Klemmelementes (12) an der Bohrstelle (11) zumindest eines Bauteils (14, 15) fixiert ist und Mittel zum Verriegeln (23, 30) aufweist.

11. Vorrichtung nach einem der vorangegangenen Ansprüche, **dadurch gekennzeichnet, dass** eine Spannschablone bzw. eine Spannzange zur Positionierung an der Bohrstelle (11) am Bauteil (13, 14) fixiert ist und Mittel zum Verriegeln (23, 30) aufweist.

## Claims

1. Drill attachment device for assisting a feed motion of a drilling machine (2), wherein the drill attachment device (1) comprises a locking unit (7) as well as a mechanical feed mechanism (4) for guiding a drilling tool (16) and wherein the locking unit (7) substantially comprises a locking bush (19), which is workingly connected to an attachment sleeve (18) fastened to the drilling machine (2) and the feed mechanism (4) executes the feed motion of the drilling machine (2) by means of an actuating unit (5) and a positioning means (6), **characterized in that** as positioning means a Bowden wire having a wire (8) is provided, wherein the wire (8) at the positioning location has at least two wire ends (8A, 8B) that are attached to the locking bush (19) and wherein the actuating unit (5) takes the form of a feed lever disposed in the holding- and access region of the drilling machine (2).

2. Device according to claim 1, **characterized in that** the wire (8) of the Bowden wire (6) is disposed in the guide to the point of attachment (24, 28) to the locking bush (19) in deflection- and guide sleeves (9A, 9B).

3. Device according to one of claims 1 or 2, **characterized in that** the locking bush (19) docks with and locks on a drilling bush (3) disposed at the drilling point (11).

4. Device according to claim 3, **characterized in that** on the front end (21) of the locking bush (19) a closing ring (24) is provided, to which the wire ends (9, 10) are attached, the closing ring (24) through actuation of the positioning means (6) is slidable over spherical elements (25) and hence establishes a positive connection between drilling bush (3) and the locking bush (19).

5. Device according to one of claims 1 to 4, **characterized in that** the locking bush (19) is lockable directly on a clamping element (12) disposed at the drilling point (12) and/or on a drilling template.

6. Device according to one of claims 3 or 5, **characterized in that** between locking bush (19) and drilling bush (3) and/or clamping element (12) a circular wedge interlock by means of frictional engagement is provided.

7. Device according to one of claims 1 to 6, **characterized in that** after establishment of a rigid connection between locking bush (19) and drilling bush (3) and/or clamping element (12) and after switching-on of the start button (27) of the drilling machine (2) an actuation of the positioning means (6) is effected and hence a drill feed motion in the direction of the drilling point may be executed.

8. Device according to one of claims 1 to 7, **characterized in that** a delimitation of the drill feed path in the form of a stop is realized by means of a shoulder (28) or an adjustable ring on the locking bush (19).

9. Device according to one of claims 1 to 8, **characterized in that**, after the drill feed path delimitation is reached, a restoring spring (22) disposed between the locking bush (19) and the attachment sleeve (18) pulls the drilling machine (2) out of the drilled hole counter to the drill feed motion.

10. Device according to one of the preceding claims, **characterized in that** the drilling bush (3) is fixed by means of a clamping element (12) to the drilling point (11) of at least one component (14, 15) and comprises locking means (23, 30).

11. Device according to one of the preceding claims, **characterized in that** a chucking template and/or collet for positioning at the drilling point (11) is fixed to the component (13, 14) and comprises locking means (23, 30).

## Revendications

1. Dispositif additionnel de perçage pour assister le mouvement d'avance d'une perceuse (2), ce dispositif (1) présentant une unité de blocage (7) ainsi qu'un mécanisme d'avance (4) pour guider un outil de perçage (10), l'unité de blocage (7) comprenant essentiellement une douille de blocage (19) qui est en liaison active avec une douille additionnelle (18) fixée à la perceuse (2) et le mécanisme d'avance (4) assurant par l'intermédiaire d'une unité d'actionnement (5) et d'un moyen de réglage le mouvement d'avance de la perceuse (2), ce dispositif additionnel étant **caractérisé en ce qu'**il est prévu comme moyen de réglage un câble Bowden (6) dont le câble (8) présente au point de réglage au moins deux extrémités de câble (8A, 8B) qui sont en prise avec la douille de blocage (19), l'unité d'actionnement (5) étant constituée par un levier d'avance monté dans la zone de maintien et d'accès de la perceuse.

2. Dispositif selon la revendication 1, **caractérisé en ce que** le câble (8) du câble Bowden (6), dans le guidage qui conduit aux points d'action (24, 28) sur la douille de blocage (19), est disposé dans des douilles de déflection et de guidage (9A, 9B).

3. Dispositif selon la revendication 1 ou 2, **caractérisé en ce que** la douille de blocage (19) est amarrée et bloquée sur une douille de perçage (3) disposée au point de perçage (11).

4. Dispositif selon la revendication 3, **caractérisé en ce qu'**il est prévu à l'extrémité avant (21) de la douille de blocage (19) une bague de fermeture (24) avec laquelle sont en prise les extrémités de câble (9, 10) et qui peut coulisser par actionnement du moyen de réglage (6) par l'intermédiaire d'éléments à bille (25) en établissant ainsi entre la douille de perçage (3) et la douille de blocage (19) une liaison verrouillée par combinaison de formes.

5. Dispositif selon une des revendications 1 à 4, **caractérisé en ce que** la douille de blocage (19) peut être bloquée directement sur un élément de serrage (12) disposé au point de perçage (11) ou sur un gabarit de perçage.

6. Dispositif selon la revendication 3 ou 5, **caractérisé en ce qu'**entre la douille de blocage (19) et la douille de perçage (3) ou l'élément de serrage (12) est prévu un blocage à coin circulaire agissant par friction.

7. Dispositif selon une des revendications 1 à 6, **caractérisé en ce qu'**une fois établie une liaison rigide entre la douille de blocage (19) et la douille de perçage (3) ou l'élément de serrage (12) et après enclenchement du bouton de démarrage (27) de la perceuse (2), le moyen de réglage (6) est actionné et qu'ainsi peut s'effectuer un mouvement d'avance de perçage en direction du point de perçage.

8. Dispositif selon une des revendications 1 à 7, **caractérisé en ce qu'**une limitation de l'avance de perçage est réalisée par butée au moyen d'un épaulement (28) ou d'une bague réglable sur la douille de blocage (19).

9. Dispositif selon une des revendications 1 à 8, **caractérisé en ce qu'**une fois que le mouvement d'avance de perçage a atteint sa limite, un ressort de rappel (22) disposé entre la douille de blocage (19) et la douille additionnelle (18), tire la perceuse en la dégageant du trou de perçage dans le sens opposé au mouvement d'avance.

10. Dispositif selon une des revendications précédentes, **caractérisé en ce que** la douille de perçage (3) est fixée par un élément de serrage (12) sur le point de perçage (11) d'au moins un composant (14, 15), cette douille présentant des moyens de blocage (23, 30).

11. Dispositif selon une des revendications précédentes, **caractérisé en ce que** pour le positionnement sur le point de perçage (11), un gabarit ou une tige de serrage est fixé sur le composant (13, 14) et présente des moyens de blocage (23, 30).
